# EUROPÄISCHE PATENTSCHRIFT

(11) **EP 3 212 921 B1**
(45) Veröffentlichungstag und Bekanntmachung des Hinweises auf die Patenterteilung: **22.08.2018**
(21) Anmeldenummer: 15797612.7
(22) Anmeldetag: 30.10.2015
(51) Int. Cl.: F02M 35/12

(54) **RESONATOR**
RESONATOR
RÉSONATEUR

(30) Priorität: 31.10.2014 DE 102014115898
(43) Veröffentlichungstag der Anmeldung: 06.09.2017
(73) Patentinhaber: Umfotec GmbH, 37154 Northeim (DE); Denker, Dietrich, 73760 Ostfildern (DE)
(72) Erfinder: DENKER, Dietrich, 73760 Ostfildern (DE); BUCK, Ralf, 85110 Kipfenberg/Schelldorf (DE)
(74) Vertreter: Schneider, Peter Christian
(86) Internationale Anmeldenummer: PCT/EP2015/075334
(87) Internationale Veröffentlichungsnummer: WO 2016/066836

(56) Entgegenhaltungen:
- EP-A1- 2 256 330
- EP-A1- 2 757 235
- DE-A1-102008 015 353
- DE-A1-102008 032 491
- US-A- 2 323 955

## Beschreibung

### Gebiet der Erfindung

Die Erfindung betrifft einen Resonator zur Absenkung von Luftschall mit mindestens einer zwischen einem Einlassstück und einem Auslassstück angeordneten ersten Ringkammer und einem zwischen Einlassstück und Auslassstück angeordneten Innenrohr oder Innenrohrstücken, mit Wanddurchbrüchen als Verbindung zur benachbarten Ringkammer, wobei die erste Ringkammer durch mindestens eine radial umlaufende Trennrippe in mindestens zwei Teilkammern unterteilt ist, und wobei die Trennrippe ein freies Ende aufweist, das zur in radialer Richtung benachbarten Wandung einen umlaufenden Ringspalt bildet.

### Stand der Technik

Aus der DE 603 01 437 T2 ist ein Resonator zur Absenkung von Luftschall mit zwischen einem Einlassstück und einem Auslassstück angeordneten Ringkammern bekannt. Zwischen Einlassstück und Auslassstück ist ein Innenrohr als Leitung angeordnet. Das Innenrohr weist Wanddurchbrüche als Verbindung zu den benachbarten Ringkammern auf. Die benachbarten Ringkammern sind jeweils durch eine Einschnürung eines die Ringkammern in radialer Richtung nach außen abgrenzenden Außenrohrs voneinander getrennt.

Nachteilig bei dem bekannten Resonator ist, dass zwischen der Einschnürung und dem Innenrohr ein Durchgang angeordnet ist, der einen Versorgungsfluss von einer Kammer zur nächsten Kammer sicherstellt. Damit soll eine schwierige Abdichtung vermieden und durch einen Leckstrom ersetzt werden.

Weiterhin ist aus der DE 199 56 172 B4 ein Resonator zur Absenkung von Luftschall mit zwischen einem Einlassstück und einem Auslassstück angeordneten Ringkammern bekannt. Zwischen dem Einlassstück und dem Auslassstück sind Innenrohrstücke als Leitung angeordnet. Über umlaufende Schlitze, die zwischen den Enden von Innenrohrstücken gebildet werden, steht die Leitung mit den Ringkammern in Verbindung.

Nachteilig bei diesem bekannten Resonator, der sich grundsätzlich bewährt hat, ist, dass zur Verbesserung der frequenzabhängigen Dämmungswerte noch weitere Abstimmungsmöglichkeiten unter Vermeidung komplizierter Innendichtungen wünschenswert sind.

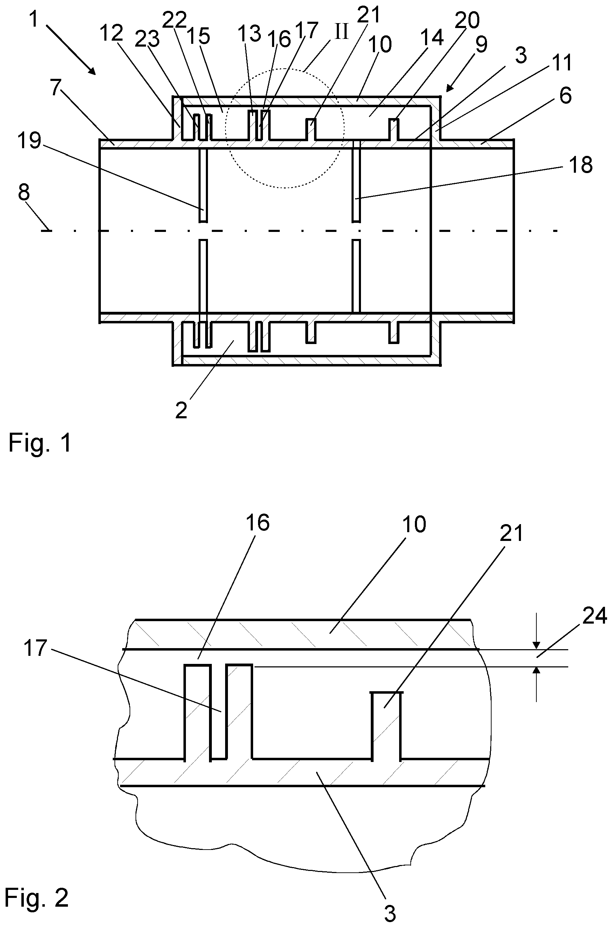

Aus der DE 10 2008 015 353 A1 ist ein einen Resonator zur Absenkung von Luftschall mit beispielsweise zwei Kammern offenbart. Zwischen einem Einlassstück und einem Auslassstück ist ein Innenrohr mit Wanddurchbrüchen als Verbindung zur benachbarten Ringkammer angeordnet. Die Ringkammern sind in ihrer Längsrichtung durch eine umlaufende Trennrippe voneinander getrennt. In Figur 2 weist die Trennrippe ein freies Ende auf, das zur in radialer Richtung benachbarten Wandung scheinbar einen umlaufenden Ringspalt bildet, der jedoch in der zugehörigen Beschreibung nicht beschrieben ist.

Nachteilig dabei ist, dass mit dem Ringspalt keine ausreichende Abdichtung zwischen den Kammern möglich ist.

Aus der EP 2 757 235 A1 ist ebenfalls ein Resonator zur Absenkung von Luftschall mit zwei zwischen einem Einlassstück und einem Auslassstück angeordneten Ringkammern und einem zwischen Einlassstück und Auslassstück angeordneten Innenrohr mit Wanddurchbrüchen als Verbindung zu den benachbarten Ringkammern. Die beiden Ringkammern werden durch eine umlaufende Trennrippe voneinander getrennt und dadurch unabhängige Volumina geschaffen. Obwohl in Figur 1 das der Außenwandung benachbarte Ende der Trennrippe einen radial Abstand aufweist, wird in der zugehörigen Beschreibung beschrieben, dass die Trennwand als ringförmige Wand mit gebördeltem Außenrand, der an die Mantelinnenseite geschweißt ist und mit einem gebördeltem Innenrand, der an der Außenseite des Rohres lose anliegt oder dort ebenfalls verschweißt ist, ausgebildet ist. Damit wird dem Fachmann in der Beschreibung die Lehre erteilt, zwischen Trennrippe und benachbarter Wandung keinen Ringspalt anzuordnen.

Aus der US 2 323 955 A, die als nächstliegender Stand der Technik betrachtet wird, ist ein Resonator zur Absenkung von Luftschall mit mindestens einer zwischen einem Einlassstück und einem Auslassstück angeordneten ersten Ringkammer und einem zwischen Einlassstück und Auslassstück angeordneten Innenrohr mit Wanddurchbruch als Verbindung zur benachbarten Ringkammer, wobei die erste Ringkammer durch mindestens eine radial umlaufende Trennrippe ein freies Ende aufweist, das zur in radialer Richtung benachbarten Wandung einen umlaufenden Ringspalt bildet, bekannt.

Nachteilig bei dem bekannten Resonator ist, dass die Teilkammern keine eigene Verbindung über Wanddurchbrüche im Innenrohr zu dessen Innenrohrraum aufweisen. Dies hat zur Folge, dass über die von den Trennrippen gebildeten Ringspalte eine Strömung erfolgen muss, um die Teilkammern nutzen zu können. Die Bildung einer stationär mitschwingenden Luftschicht als "Dichtung" ist damit nicht möglich.

### Aufgabenstellung

Es ist die Aufgabe der vorliegenden Erfindung, die bekannten Resonatoren zu verbessern. Insbesondere sollen bei einfachem Aufbau unter Vermeidung von schwierigen Abdichtungen sowie unter Vermeidung von unerwünschten Leckströmen die Dämmungswerte und ihre Abstimmungsmöglichkeiten verbessert werden.

### Darlegung der Erfindung

Diese Aufgabe wird in Verbindung mit den Merkmalen des Oberbegriffs von Anspruch 1 dadurch gelöst, dass zur Aufnahme einer stationär mitschwingenden Luftschicht die Ringspalthöhe des umlaufenden Ringspaltes in radialer Richtung zwischen dem freien Ende der Trennrippe und der benachbarten Wandung zwischen 0,3 und 2 mm beträgt, dass die Trennrippe als eine umlaufende Doppelrippe ausgebildet ist, dass die Doppelrippe einen umlaufenden Spaltraum, und dass der Spaltraum zum umlaufenden Ringspalt hin offen ist, und dass das die Teilkammern begrenzende Innenrohr oder Innenrohrstück Wanddurchbrüche als Verbindung zur benachbarten Teilkammer aufweist.

Durch die Anordnung einer radial umlaufenden Trennrippe wird die Ringkammer relativ einfach in zwei Teilkammern unterteilt. Dadurch, dass die Trennrippe ein freies Ende aufweist, das zur benachbarten Wandung hin einen umlaufenden Ringspalt zur Aufnahme einer stationär mitschwingenden Luftschicht bildet, erübrigt sich zum einen eine relativ schwierige Abdichtung und zum anderen werden Leckströme vermieden, da die von dem Ringspalt aufgenommene Luftschicht dort stationär verbleibt und lediglich mitschwingt. Die Massenträgheit der Luftschicht verhindert somit Leckströme zwischen den Teilkammern über die Trennrippe. Dadurch werden zum einen die Dämmungswerte verbessert und zum anderen werden die Abstimmungsmöglichkeiten erhöht.. Durch den umlaufenden Spaltraum der Doppelrippe (im Sinne dieser Anmeldung werden unter Doppelrippe auch Mehrfachrippen mit mehreren Spalträumen verstanden) wird in Verbindung mit dem umlaufenden Ringspalt eine Art Labyrinthdichtung geschaffen, die den Verbleib der "stationär" mitschwingenden Luftschicht begünstigt.

Dadurch, dass das die Teilkammern begrenzende Innenrohr oder Innenrohrstück Wanddurchbrüche als Verbindung zur benachbarten Teilkammer aufweist, ist jede der beiden Teilkammern mit dem Zustrom über das Einlassstück und das Innenrohr verbunden.

Nach einer bevorzugten Ausführungsform der Erfindung weist mindestens eine der Teilkammern einen umlaufenden Steuersteg auf. Dabei weist der Steuersteg in radialer Richtung eine gleiche oder geringere Höhe auf als die Trennrippe. Durch die gleiche oder geringere Höhe der Steuerstege und den fehlenden Spaltraum wird sichergestellt, dass die Steuerstege gerade nicht als Dichtung wirken, sondern vielmehr einen gesteuerten Druck- Resonanzaufbau ermöglichen. Damit werden die Einflussmöglichkeiten weiter erhöht. Insbesondere kann man durch die Einführung von Steuer- oder Blindstegen eine weitere stabile Grund-Resonanz und höherfrequente Reaktionen erhalten, die zusätzliche Designabstimmungen mit größerer Dämmbreite ermöglichen.

Nach einer weiteren bevorzugten Ausführungsform der Erfindung beträgt die Ringspalthöhe zwischen 0,5 und 1,5 mm. Besonders bewährt hat sich dabei eine Ringspalthöhe von 1 mm.

Gemäß einer bevorzugten Ausführungsform der Erfindung ist die Trennrippe an dem Innenrohr oder dem Innenrohrstück angeordnet, wobei die dem freien Ende der Trennrippe benachbarte Wandung von der dem Innenrohr oder Rohrstück abgewandten Außenwandung der ersten Ringkammer gebildet wird. Grundsätzlich kann die Trennrippe aber auch an der Außenwandung der ersten Ringkammer angeordnet sein, wobei die dem freien Ende der Trennrippe benachbarte Wandung von dem Innenrohr oder ersten Innenrohrstück gebildet wird.

Bevorzugt ist das Einlassstück mit einer topfähnlichen ersten Mantelhülle verbunden, deren zylindrische Wandung die Außenwandung der ersten Ringkammer bildet und deren ringförmige Seitenwandung als Verbindung zum Einlassstück gleichzeitig die seitliche Begrenzung der ersten Ringkammer zum Einlassstück hin bildet.

Gemäß einer weiteren bevorzugten Ausführungsform der Erfindung wird das Auslassstück von einer Verlängerung des Innenrohrs gebildet, wobei das Auslassstück zum Einlassstück hin eine ringförmige Seitenwandung aufweist, die die seitliche Begrenzung der ersten Ringkammer zum Auslassstück hin bildet.

Nach einer weiteren Ausführungsform der Erfindung weist das erste Innenrohrstück an seinem dem Einlassstück abgewandten Ende eine ringförmige Seitenwandung auf, die die seitliche Begrenzung der ersten Ringkammer zum Auslassstück hin bildet und über die das erste Innenrohrstück mit der ersten Mantelhülle verbunden ist. Das Auslassstück geht in das zweite Innenrohrstück über, wobei das Auslassstück den Boden einer topfförmigen zweiten Mantelhülle durchdringt, dessen zylindrische Wandung an ihrem der ersten Mantelhülle zugewandten Ende mit der ringförmigen Seitenwandung verbunden ist, die zugleich eine erste Seitenwandung für eine zweite Ringkammer bildet, deren zweite Seitenwandung von dem Boden der topfförmigen zweiten Mantelhülle gebildet wird.

Weitere Merkmale und Vorteile der Erfindung ergeben sich aus der nachfolgenden speziellen Beschreibung und den Zeichnungen.

### Kurzbeschreibung der Zeichnungen

Es zeigen:
- Figur 1:: eine Seitenansicht im Schnitt eines Resonators mit einer Ringkammer, die in zwei Teilkammern unterteilt ist,
- Figur 2:: eine vergrößerte Darstellung der Einzelheit II von Figur 1,
- Figur 3:: eine Seitenansicht im Schnitt eines weiteren Resonators mit einer ersten Ringkammer, die in zwei Teilkammern unterteilt ist, und einer zweiten Ringkammer,
- Figur 4:: eine Seitenansicht des Resonators von Figur 3 aus Richtung IV und
- Figur 5:: eine Seitenansicht im Schnitt eines weiteren Resonators mit einer ersten Ringkammer, die in zwei Teilkammern unterteilt ist, und einer zweiten Ringkammer.

### Beschreibung bevorzugter Ausführungsformen

Ein Resonator 1 zur Absenkung von Luftschall besteht im Wesentlichen aus einer ersten Ringkammer 2, einem Innenrohr 3 oder Innenrohrstücken 4, 5.

Die erste Ringkammer 2 ist zwischen einem Einlassstück 6 und einem Auslassstück 7 angeordnet. Entsprechend Figur 1 wird die erste Ringkammer 2 nach innen zur Längsachse 8 hin durch das Innenrohr 3 begrenzt. Das Einlassstück 6 ist mit einer topfähnlichen ersten Mantelhülle 9 verbunden, deren zylindrische Wandung die Außenwandung 10 der ersten Ringkammer 2 bildet und deren ringförmige Seitenwandung 11 als Verbindung zum Einlassstück 6 gleichzeitig die seitliche Begrenzung der ersten Ringkammer 2 zum Einlassstück 6 hin bildet.

Entsprechend dem Ausführungsbeispiel der Figur 1 wird das Auslassstück 7 von einer Verlängerung des Innenrohrs 3 gebildet. Das Auslassstück 7 weist zum Einlassstück 6 hin eine ringförmige Seitenwandung 12 auf, die die seitliche Begrenzung der ersten Ringkammer 2 zum Auslassstück 7 hin bildet.

Entsprechend dem Ausführungsbeispiel von Figur 1 wird die erste Ringkammer 2 durch eine auf dem Innenrohr 3 radial umlaufende Trennrippe 13 in eine erste Teilkammer 14 und eine zweite Teilkammer 15 unterteilt. Die Trennrippe 13 weist in radialer Richtung zur benachbarten Wandung, im Ausführungsbeispiel die Außenwandung 10 der ersten Ringkammer 2, hin einen umlaufenden Ringspalt 16 zur Aufnahme einer nicht weiter dargestellten stationären mitschwingenden Luftschicht auf.

Die Trennrippe 13 ist als eine umlaufende Doppelrippe ausgebildet, die einen umlaufenden Spaltraum 17 begrenzt. Der Spaltraum 17 ist in radialer Richtung zum Ringspalt 16 hin offen. Das die Teilkammern 14, 15 begrenzende Innenrohr 3 weist Wanddurchbrüche 18 als Verbindung zur ersten Teilkammer 14 hin und Wanddurchbrüche 19 als Verbindung zur zweiten Teilkammer 15 hin auf. Die erste Teilkammer 14 im Ausführungsbeispiel von Figur 1 weist zwei umlaufende Steuerstege 20, 21 auf. Entsprechend weist die zweite Teilkammer 15 zwei Steuerstege 22, 23 auf. Dabei sind die Wanddurchbrüche 18 zwischen den Steuerstegen 20, 21 und die Wanddurchbrüche 19 zwischen den Steuerstegen 22, 23 angeordnet. Entsprechend Figur 1 und 2 weist der Ringspalt 16 eine Ringspalthöhe 24 von 1 mm auf.

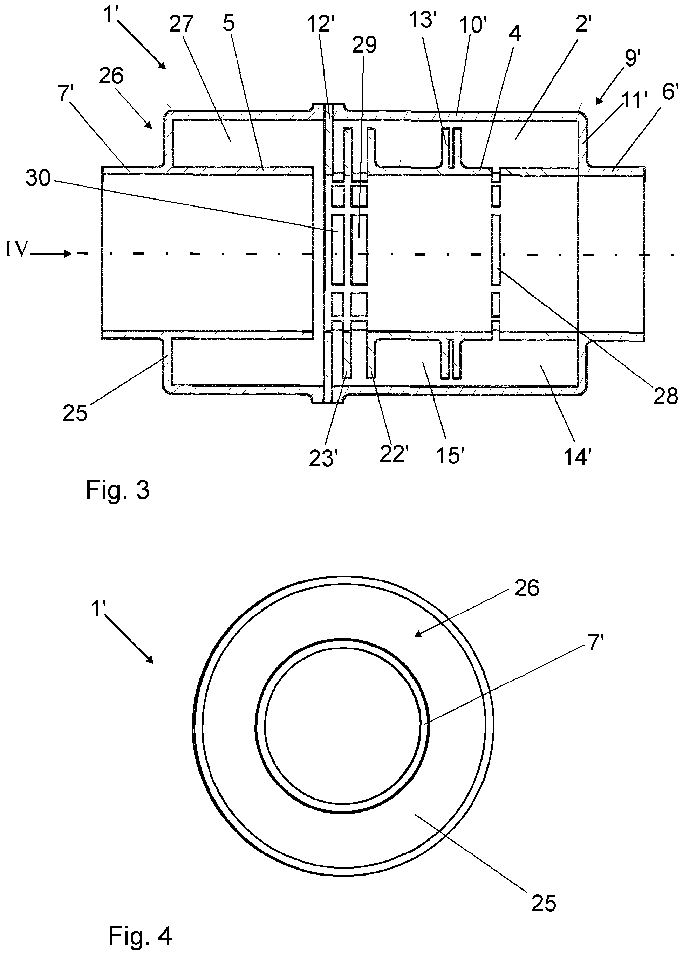

Entsprechend dem Ausführungsbeispiel der Figur 3 ist die Trennrippe 13' an dem ersten Innenrohrstück 4 des Resonators 1' angeordnet. Das erste Innenrohrstück 4 weist an seinem dem Einlassstück 6' abgewandten Ende eine ringförmige Seitenwandung 12' auf, die die seitliche Begrenzung der ersten Ringkammer 2' zum Auslassstück 7' hin bildet und über die das erste Innenrohrstück 4 mit der topfähnlichen ersten Mantelhülle 9' verbunden ist, die gegenüber der Trennrippe 13' die Außenwandung 10' der ersten Ringkammer 2' bildet.

Entsprechend dem Ausführungsbeispiel von Figur 3 geht das Auslassstück 7' in das zweite Innenrohrstück 5 über. Das Auslassstück 7' durchdringt mit dem zweiten Innenrohrstück 5 den Boden 25 einer topfähnlichen zweiten Mantelhülle 26, deren zylindrische Wandung an ihrem der topfähnlichen ersten Mantelhülle 9' zugewandten Ende mit der ringförmigen Seitenwandung 12' verbunden ist, die zugleich eine erste Seitenwandung für eine zweite Ringkammer 27 bildet, deren zweite Seitenwandung von dem Boden 25 der zweiten Mantelhülle 26 gebildet wird.

Entsprechend dem Ausführungsbeispiel der Figur 3 weist die erste Teilkammer 14' keine Steuerstege auf. Die zweite Teilkammer 15' weist zwei Steuerstege 22', 23' auf.

Die erste Teilkammer 14' weist in dem ersten Innenrohrstück Wanddurchbrüche 28 auf. Die zweite Teilkammer 15' weist zwischen den Steuerstegen 22' und 23' Wanddurchbrüche 29 und zwischen dem Steuersteg 23' und der Seitenwandung 12' Wanddurchbrüche 30 auf.

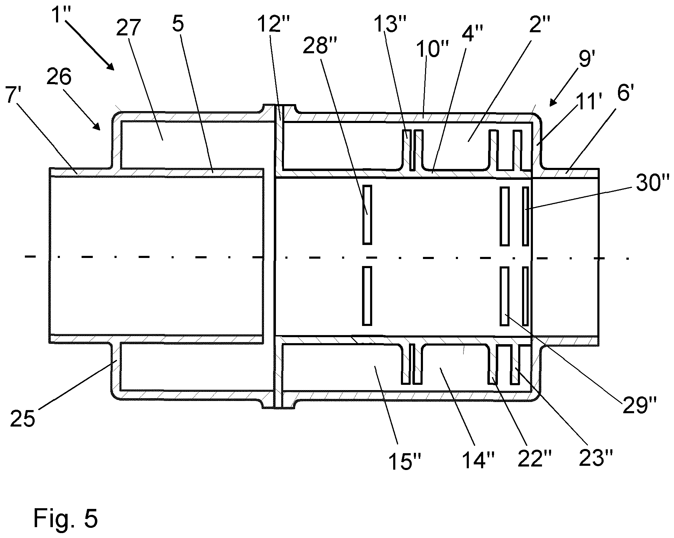

Der Resonator 1" des Ausführungsbeispiels der Figur 5 weist dem Ausführungsbeispiel der Figur 3 entsprechende Mantelhüllen 9', 26 auf, wobei das Einlassstück 6' mit der ersten Mantelhülle 9' und das Auslassstück 7' mit der zweiten Mantelhülle 26 verbunden ist. Entsprechend dem Ausführungsbeispiel der Figur 5 ist die Trennrippe 13" an dem ersten Innenrohrstück 4" des Resonators 1" angeordnet. Das erste Innenrohrstück 4" weist an seinem dem Einlassstück 6' abgewandten Ende eine ringförmige Seitenwandung 12" auf, die die seitliche Begrenzung der ersten Ringkammer 2" zum Auslassstück 7' hin bildet und über die das erste Innenrohrstück 4" mit der topfähnlichen ersten Mantelhülle 9' verbunden ist.

Entsprechend dem Ausführungsbeispiel der Figur 5 weist die erste Teilkammer 14" zwei Steuerstege 22", 23"auf, während die zweite Teilkammer 15"keine Steuerstege aufweist. Die erste Teilkammer 14" weist zwischen den Steuerstegen 22" und 23" Wanddurchbrüche 29" und zwischen dem Steuersteg 23" und der Seitenwandung 11' Wanddurchbrüche 30" auf. Die topfähnliche erste Mantelhülle 9' bildet gegenüber der Trennrippe 13" die Außenwandung 10" der ersten Ringkammer 2". Die zweite Teilkammer 15" weist in dem ersten Innenrohrstück 4" zwischen der Trennrippe 13" und der Seitenwandung 12" Wanddurchbrüche 28" auf.

Natürlich stellen die in der speziellen Beschreibung diskutierten und in den Figuren gezeigten Ausführungsformen nur illustrative Ausführungsbeispiele der vorliegenden Erfindung dar. So lassen sich zum Beispiel Ein- und Auslass, d. h. die Strömungsrichtung, vertauschen. Das Wirkprinzip kann neben der Anwendung auf zylindrische Querschnitte auch auf anderweitige Querschnittsformen angewendet werden. Dem Fachmann ist im Lichte der hiesigen Offenbarung ein breites Spektrum von Variationsmöglichkeiten an die Hand gegeben.

### Bezugszeichenliste

- 1, 1', 1": Resonator
- 2, 2', 2": erste Ringkammer
- 3: Innenrohr
- 4, 4": erstes Innenrohrstück
- 5: zweites Innenrohrstück
- 6, 6': Einlassstück
- 7, 7': Auslassstück
- 8: Längsachse
- 9, 9': erste Mantelhülle
- 10, 10', 10": Außenwandung von 2
- 11, 11': Seitenwandung von 9
- 12, 12', 12": Seitenwandung von 4
- 13, 13', 13": Trennrippe
- 14, 14', 14": erste Teilkammer von 2
- 15, 15', 15": zweite Teilkammer von 2
- 16: Ringspalt
- 17: Spaltraum von 13
- 18: Wanddurchbruch von 3
- 19: Wanddurchbruch von 3
- 20: Steuersteg von 14
- 21: Steuersteg von 14
- 22, 22', 22": Steuersteg von 15
- 23, 23'. 23": Steuersteg von 15
- 24: Ringspalthöhe von 16
- 25: Boden
- 26: zweite Mantelhülle
- 27: zweite Ringkammer
- 28, 28": Wanddurchbruch von 4
- 29, 29": Wanddurchbruch von 4
- 30, 30": Wanddurchbruch von 4

## Patentansprüche

1. Resonator (1, 1', 1") zur Absenkung von Luftschall mit mindestens einer zwischen einem Einlassstück (6, 6') und einem Auslassstück (7, 7') angeordneten ersten Ringkammer (2, 2', 2") und einem zwischen Einlassstück (6, 6') und
Auslassstück (7, 7') angeordneten Innenrohr (3) oder Innenrohrstücken (4, 4", 5), mit Wanddurchbrüchen (18, 19, 28, 28", 29, 29", 30, 30") als Verbindung zur benachbarten Ringkammer (2, 2', 2"),
wobei die erste Ringkammer (2, 2', 2") durch mindestens eine radial umlaufende Trennrippe (13, 13', 13") in mindestens zwei Teilkammern (14, 14', 14", 15, 15', 15") unterteilt ist, und wobei die Trennrippe (13, 13', 13") ein freies Ende aufweist, das zur in radialer Richtung benachbarten Wandung einen umlaufenden Ringspalt (16) bildet,
**dadurch gekennzeichnet,**
**dass** zur Aufnahme einer stationär mitschwingenden Luftschicht die Ringspalthöhe (24) des umlaufenden Ringspaltes (16) in radialer Richtung zwischen dem freien Ende der Trennrippe (13, 13', 13") und der benachbarten Wandung zwischen 0,3 und 2 mm beträgt,
**dass** die Trennrippe (13, 13', 13") als eine umlaufende Doppelrippe ausgebildet ist, dass die Doppelrippe einen umlaufenden Spaltraum (17) begrenzt, und
**dass** der Spaltraum (17) zum umlaufenden Ringspalt (16) hin offen ist und dass das die Teilkammern (14, 14', 14", 15, 15', 15") begrenzende Innenrohr (3) oder Innenrohrstück (4, 4") Wanddurchbrüche (18, 19, 28, 28", 29, 29", 30, 30") als Verbindung zur benachbarten Teilkammer (14,14', 14", 15, 15', 15") aufweist.

2. Resonator nach Anspruch 1,
**dadurch gekennzeichnet,**
**dass** mindestens eine der Teilkammern (14, 14", 15,15') mindestens einen umlaufenden Steuersteg (20, 21, 22, 22', 22", 23, 23', 23") aufweist.

3. Resonator nach Anspruch 2,
**dadurch gekennzeichnet,**
**dass** der Steuersteg (20, 21, 22, 22', 22", 23, 23', 23") in radialer Richtung eine gleiche oder geringere Höhe aufweist als die Trennrippe (13, 13', 13").

4. Resonator nach einem der Ansprüche 1 bis 3,
**dadurch gekennzeichnet,**
**dass** die Ringspalthöhe (24) zwischen 0,5 und 1,5 mm beträgt.

5. Resonator nach einem der Ansprüche 1 bis 4,
**dadurch gekennzeichnet,**
**dass** die Ringspalthöhe (24) 1 mm beträgt.

6. Resonator nach einem der Ansprüche 1 bis 5,
**dadurch gekennzeichnet,**
**dass** die Trennrippe (13, 13', 13") an dem Innenrohr (3) oder dem Innenrohrstück (4, 4") angeordnet ist und
**dass** die dem freien Ende der Trennrippe (13, 13', 13") benachbarte Wandung von der dem Innenrohr (3) oder Rohrstück (4, 4") abgewandten Außenwandung (10, 10', 10") der ersten Ringkammer (2, 2', 2") gebildet wird.

7. Resonator nach einem der Ansprüche 1 bis 6,
**dadurch gekennzeichnet,**
**dass** das Einlassstück (6, 6') mit einer ersten Mantelhülle (9, 9') verbunden ist, deren zylindrische Wandung die Außenwandung (10, 10', 10") der ersten Ringkammer (2, 2', 2") bildet und deren ringförmige Seitenwandung (11, 11',) als Verbindung zum Einlassstück (6, 6') gleichzeitig die seitliche Begrenzung der ersten Ringkammer (2, 2', 2") zum Einlassstück (6, 6') hin bildet.

8. Resonator nach Anspruch 7,
**dadurch gekennzeichnet,**
**dass** das Auslassstück (7) von einer Verlängerung des Innenrohrs (3) gebildet wird und dass das Auslassstück (7) zum Einlassstück (6) hin eine ringförmige Seitenwandung (12) aufweist, die die seitliche Begrenzung der ersten Ringkammer (2) zum Auslassstück (7) hin bildet.

9. Resonator nach Anspruch 7,
**dadurch gekennzeichnet,**
**dass** das erste Innenrohrstück (4, 4") an seinem dem Einlassstück (6') abgewandten Ende eine ringförmige Seitenwandung (12', 12") aufweist, die die seitliche Begrenzung der ersten Ringkammer (2', 2") zum Auslassstück (7') hin bildet und über die das Innenrohrstück (4, 4") mit der ersten Mantelhülle (9') verbunden ist.

10. Resonator nach Anspruch 9,
**dadurch gekennzeichnet,**
**dass** das Auslassstück (7') in das zweite Innenrohrstück (5) übergeht,
**dass** das Auslassstück (7') den Boden (25) einer topfförmigen zweiten Mantelhülle (26) durchdringt, deren zylindrische Wandung an ihrem der ersten Mantelhülle (9') zugewandten Ende mit der ringförmigen Seitenwandung (12', 12") verbunden ist, die zugleich eine erste Seitenwandung für eine zweite Ringkammer (27) bildet, deren zweite Seitenwandung von dem Boden (25) der zweiten Mantelhülle (26) gebildet wird.

## Claims

1. A resonator (1, 1', 1"') for reducing airborne noise, having at least one first ring-shaped chamber (2, 2', 2") arranged between an inlet piece (6, 6') and an outlet piece (7, 7'), and having an inner tube (3) or inner tube pieces (4, 4", 5) arranged between the inlet piece (6, 6') and outlet piece (7, 7'), with wall apertures (18, 19, 28, 28", 29, 29", 30, 30") serving as a connection to the adjacent ring-shaped chamber (2, 2', 2"),
wherein the first ring-shaped chamber (2, 2', 2") is divided by at least one radially encircling dividing rib (13, 13', 13"' into at least two sub-chambers (14, 14', 14", 15, 15', 15"), and wherein the dividing rib (13, 13', 13") has a free end which, relative to the wall which is adjacent in a radial direction, forms an encircling annular space (16),
**characterised in that**,
for receiving an air layer which co-resonates in steady-state fashion, the height (24) of the annular space in the radial direction between the free end of the dividing rib (13, 13', 13") and the adjacent wall is between 0.3 and 2 mm,
the dividing rib (13, 13', 13") is designed as a encircling double rib,
that the double rib delimits an encircling circumferential gap (17), and **in that** the gap (17) is open towards the encircling annular space (16) and the inner tube (3) or inner tube piece (4, 4") delimiting the sub-chambers (14,14', 14", 15, 15', 15") has wall apertures (18, 19, 28, 28", 29, 29", 30, 30") forming a connection to the adjacent sub-chamber (14, 14', 14", 15, 15', 15").

2. The resonator according to claim 1,
**characterised in that**
at least one of the sub-chambers (14, 14", 15, 15') has at least one encircling control fin (20, 21, 22, 22', 22", 23, 23', 23").

3. The resonator according to claim 2,
**characterised in that**
in the radial direction, the control fin (20, 21, 22, 22', 22", 23, 23', 23") is of the same height as or lower than the dividing rib (13, 13', 13").

4. The resonator according to any of claims 1 to 3,
**characterised in that**
the height (24) of the annular space is between 0.5 und 1.5 mm.

5. The resonator according to any of claims 1 to 4,
**characterised in that**
the height (24) of the annular space is 1 mm.

6. The resonator according to any of claims 1 to 5,
**characterised in that**
the dividing rib (13, 13', 13") is arranged on the inner tube (3) or the inner tube piece (4, 4") and **in that** the wall adjacent to the free end of the dividing rib (13, 13', 13") is formed by the outer wall (10, 10', 10") of the first ring-shaped chamber (2, 2', 2"), said outer wall facing away from the inner tube (3) or inner tube piece (4, 4").

7. The resonator according to any of claims 1 to 6,
**characterised in that**
the inlet piece (6, 6') is attached to a first jacket-sheath (9, 9'), the cylindrical wall of which forms the outer wall (10, 10', 10") of the first ring-shaped chamber (2, 2', 2") and the ring-shaped lateral wall of which (11, 11',), that serves as a connection to the inlet piece (6, 6'), simultaneously forms the lateral delimitation of the first ring-shaped chamber (2, 2', 2"') in the direction of the inlet piece (6, 6').

8. The resonator according to claim 7,
**characterised in that**
the outlet piece (7) is formed by an extension of the inner tube (3) and that the outlet piece (7) has, in the direction of the inlet piece (6), a ring-shaped lateral wall (12) which forms the lateral delimitation of the first ring-shaped chamber (2) towards the outlet piece (7).

9. The resonator according to claim 7,
**characterised in that**,
at its end facing away from the inlet piece (6'), the first inner tube piece (4, 4") has a ring-shaped lateral wall (12', 12"), which forms the lateral delimitation of the first ring-shaped chamber (2', 2") towards the outlet piece (7') and by means of which the inner tube piece (4, 4") is attached to the first jacket-sheath (9').

10. The resonator according to claim 9,
**characterised in that**
the outlet piece (7') transitions into the second inner tube piece (5), that the outlet piece (7') penetrates the base (25) of a pot-shaped second jacket-sheath (26), the cylindrical wall of which is connected, at its end facing toward the first jacket-sheath (9'), to the ring-shaped lateral wall (12', 12'), which also forms a first lateral wall for a second ring-shaped chamber (27), the second lateral wall of which is formed by the base (25) of the second jacket-sheath (26).

## Revendications

1. Résonateur (1, 1', 1") permettant de diminuer le bruit aérien, comportant au moins une première chambre annulaire (2, 2', 2") disposée entre un élément d'entrée (6, 6') et un élément de sortie (7, 7'), et un tube intérieur (3) ou des éléments de tubes intérieurs (4, 4", 5) disposés entre l'élément d'entrée (6, 6') et l'élément de sortie (7, 7') et présentant des ouvertures de paroi (18, 19, 28, 28", 29, 29", 30, 30") communiquant avec la chambre annulaire (2, 2', 2") adjacente,
la première chambre annulaire (2, 2', 2") étant divisée par au moins une nervure de séparation (13, 13', 13") radialement périphérique en au moins deux parties (14, 14', 14", 15, 15', 15"), et la nervure de séparation (13, 13', 13") présentant une extrémité libre qui forme par rapport à la paroi adjacente dans la direction radiale une fente annulaire (16) périphérique,
**caractérisé en ce que**,
pour recevoir une couche d'air en co-résonance stationnaire, la hauteur (24) de la fente annulaire dans la direction radiale entre l'extrémité libre de la nervure de séparation (13, 13', 13") et la paroi adjacente est comprise entre 0,3 et 2 mm, que la nervure de séparation (13, 13', 13") est conçue comme une nervure double périphérique,
que la nervure double délimite un espace (17) périphérique, et que
l'espace (17) est ouvert vers la fente annulaire (16) périphérique et le tube intérieur (3) ou l'élément de tube intérieur (4, 4") délimitant les parties (14, 14', 14", 15, 15', 15") présente des ouvertures de paroi (18, 19, 28, 28", 29, 29", 30, 30") qui communiquent avec la partie (14, 14', 14", 15, 15', 15") adjacente.

2. Résonateur selon la revendication 1, **caractérisé en ce que**
au moins une des parties (14, 14", 15, 15') présente au moins une ailette de guidage périphérique (20, 21, 22, 22', 22", 23, 23', 23").

3. Résonateur selon la revendication 2,
**caractérisé en ce que**
dans la direction radiale, l'ailette de guidage (20, 21, 22, 22', 22", 23, 23', 23") a une hauteur égale ou inférieure à la nervure de séparation (13, 13', 13").

4. Résonateur selon l'une quelconque des revendications 1 à 3,
**caractérisé en ce que**
la hauteur (24) de la fente annulaire est comprise entre 0,5 et 1,5 mm.

5. Résonateur selon l'une quelconque des revendications 1 à 4,
**caractérisé en ce que**
la hauteur (24) de la fente annulaire est de 1 mm.

6. Résonateur selon l'une quelconque des revendications 1 à 5,
**caractérisé en ce que**
la nervure de séparation (13, 13', 13") est disposée sur le tube intérieur (3) ou l'élément de tube intérieur (4, 4") et **en ce que**
la paroi adjacente à l'extrémité libre de la nervure de séparation (13, 13', 13") est formée par la paroi extérieure (10, 10', 10") de la première chambre annulaire (2, 2', 2"), ladite paroi extérieure étant détournée du tube intérieur (3) ou de l'élément de tube intérieur (4, 4").

7. Résonateur selon l'une quelconque des revendications 1 à 6,
**caractérisé en ce que**
l'élément d'entrée (6, 6') est fixé à une première gaine-enveloppe (9, 9'), dont la paroi cylindrique forme la paroi extérieure (10, 10', 10") de la première chambre annulaire (2, 2', 2") et dont la paroi latérale annulaire (11, 11'), qui communique avec l'élément d'entrée (6, 6'), forme simultanément la délimitation latérale de la première chambre annulaire (2, 2', 2") dans la direction de l'élément d'entrée (6, 6').

8. Résonateur selon la revendication 7,
**caractérisé en ce que**
l'élément de sortie (7) est formé par un prolongement du tube intérieur (3) et que l'élément de sortie (7) présente, en direction de l'élément d'entrée (6), une paroi latérale annulaire (12) qui forme la délimitation latérale de la première chambre annulaire (2) vers l'élément de sortie (7).

9. Résonateur selon la revendication 7,
**caractérisé en ce que**,
à son extrémité détournée de l'élément d'entrée (6'), le premier élément de tube intérieur (4,4") présente une paroi latérale annulaire (12', 12") qui forme la délimitation latérale de la première chambre annulaire (2', 2") vers l'élément de sortie (7') et au moyen de laquelle l'élément de tube intérieur (4, 4") est fixé à la première gaine-enveloppe (9').

10. Résonateur selon la revendication 9,
**caractérisé en ce que**
l'élément de sortie (7') passe dans le second élément de tube intérieur (5), que l'élément de sortie (7') pénètre la base (25) d'une seconde gaine-enveloppe (26) en forme de pot, dont la paroi cylindrique communique, à son extrémité faisant face à la première gaine-enveloppe (9'), avec la paroi latérale annulaire (12', 12"), qui forme également une première paroi latérale pour une seconde chambre annulaire (27), dont la seconde paroi latérale est formée par la base (25) de la seconde gaine-enveloppe (26).
